# EUROPEAN PATENT APPLICATION

(11) **EP 1 387 144 A1**
(43) Date of publication of application: **04.02.2004**
(21) Application number: 03380175.4
(22) Date of filing: 16.07.2003
(51) Int. Cl.: G01B 5/004, G01B 5/255

(54) **Dynamic measurement of an object's relative position, in particular of a wheel of a vehicle**

(30) Priority: 29.07.2002 ES 200201780
(71) Applicant: Idiada Automotive Technology, S.A., 43710 Santa Oliva (ES)
(72) Inventor: Catala Garcia, Alexandre, 08800 Vilanova i la Geltru (ES); Hoppenot, Sebastien, 43717 La Biscal del Penedes (ES)
(74) Representative: SUGRANES - VERDONCES - FERREGÜELA

(57) **Abstract**

Device for the dynamic measurement of an object's relative position, with respect to a mobile reference system, which comprises an articulated mechanical arm with five degrees of freedom and with five angular position sensors that allow the measurement of the three spatial coordinates of a point on the object and the two inclination angles (α (convergence) and γ (descent)) that define a plane of symmetry for the measuring object with respect to a reference point, said device being particularly applicable to the dynamic measurement of the relative position of a vehicle's wheel (18). For this purpose one end of the device can be connected by a fixing device to the chassis and the other end of the device can be connected to the wheel (18) via a rotational axle (6) and an adaptor (17).

## Description

### Technical field of the invention

The invention relates to a device for the dynamic measurement of an object's relative position, particularly applicable to the dynamic measurement of the relative position of a vehicle wheel.

### Background of the invention

In the study of a road vehicle's dynamic behaviour, it is very interesting to obtain information about the vehicle's wheel position with respect to other data, such as the convergence angle (the rotation angle of the wheels that make the vehicle move), or the angle of descent (inclination from the horizontal) in order to study the chassis response to these movements. To perform these studies several measurements, obtained by different procedures and with different devices, are required, making it very difficult to obtain these parameters in continuum (on route or without stopping the vehicle) and in different driving conditions.

Embodiments proximate to the object of the invention do not address the needs of the automotive industry, for example, where the different systems for measuring the position of the vehicle's wheels with respect to the chassis, or a reference point on it, either take static readings, with the vehicle motionless, or are unable to measure the wheel position as well as the rotation and inclination angles (convergence and descent respectively) of it, all using the same system

Likewise, systems cannot easily be removed to be installed on another vehicle since their calibration and placement is complex and different for each make of vehicle and vehicle model.

Devices capable of detecting or measuring other parameters, as well as the geometric position of the vehicle's wheels, use systems based on optical observations, such as EP 1203927, or systems such as in US 2002/0018218, based on light beam sources and sensors that capture the reflected beams.

The current mechanical devices, as well as not being able to determine all of the required parameters, are equipped with telescopic arms that reduce the accuracy of the final measurements, as the final results are based on trigonometric calculations between the different sides of a triangle and the values of the sines and cosines of the defined angles within, based on known mathematical ratios.

So, a system which would allow simultaneous measurement of the wheel position, rotation angle and inclination angle, with the required precision and which were removable and adaptable to many vehicles would be very useful in the study of the dynamic behaviour of those vehicles and their auxiliary systems such as suspension, track arms, axles or steering systems as well as being a powerful tool to compare the dynamic behaviour of different vehicle models or of vehicles with similar characteristics.

### Explanation of the Invention

With the aim of delivering a simultaneous solution to all of these problems and drawbacks, the device for the dynamic measurement of an object's relative position is introduced.

The device for the dynamic measurement of an object's relative position, in a mobile reference, acts to connect said reference and the object whose coordinates and relative position are to be determined.

In essence, the device for the dynamic measurement of an object's relative position is characterised in that it comprises an articulated mechanical arm with five degrees of freedom and five angular positioned sensors that allow measurement of the three spatial coordinates, X, Y and Z of a point on the object and the measurement of the inclination angles α (convergence) and γ (descent) that define a plane of symmetry for the object with respect to a reference point.

In accordance with a preferred embodiment, the articulated arm with five degrees of freedom consists of: a rotational joint, about an imaginary axis, acting as a connection between the reference point and the articulated arm through a first working part; three rotational joints about 3 imaginary axes, parallel to each other, with the same direction, which act as a connection between the first working part and the next three. Another joint about another imaginary axis connects the last two working parts of the articulated arm.

In accordance with another preferred embodiment, the sensors located in each of the rotational joints of the device, also capture the absolute angular position based on optical phenomena.

In accordance with a preferred embodiment, the device is adapted to be installed on a car, in such a way that the reference point comprises a fixing device that can be attached to a fixed point on the vehicle, and the furthest working part of the articulated arm comprises an adaptor, connected using a rotating axle, which can be coupled to one of the vehicle's wheels so that the dynamic measurement device determines the relative position with respect to a fixed point on the vehicle and allows the study of the dynamic behaviour of the running gear in different driving conditions.

In accordance with another characteristic relating to the invention, a new procedure to determine the dynamic behaviour of a passenger vehicle is put forward, based on the measurement of the relative position of its wheels and it is characterised in that it uses at least one device for the dynamic measurement of an object's relative position, each device being attached to each of the vehicle's wheels.

The aforementioned characteristics of the device for the dynamic measurement of an object relative position provide improvements to the current devices for the measurement of an object's relative position and its inclination angles because current systems do not offer the required level of accuracy in measurement: range and precision and they are also very complicated to install and use.

The device for the dynamic measurement of an object's relative position provides a precise, lightweight tool with a small footprint, very useful in the study of the behaviour of the different elements associated with the wheels of a vehicle such as steering, suspension, braking systems, etc, both on the move and under different driving conditions.

### Brief description of the drawings

The attached drawings represent, as a non-limiting example, a preferred embodiment for the device for the dynamic measurement of an object's relative position. In these drawings,

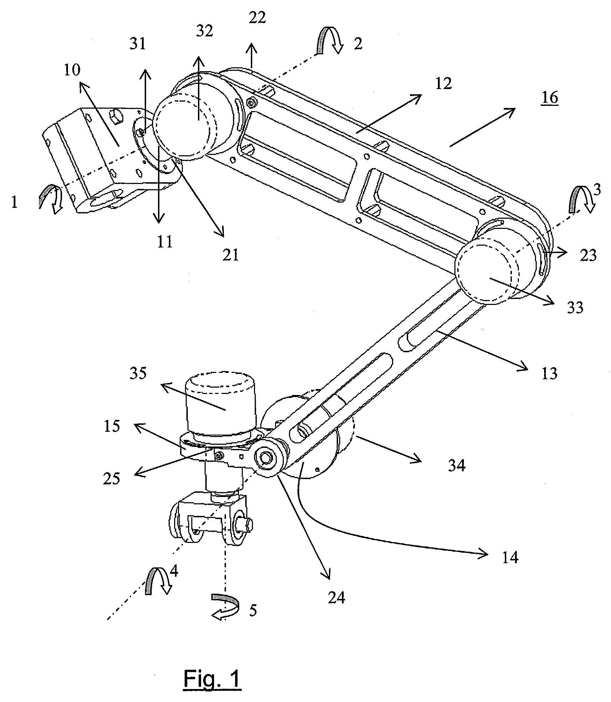

- Fig. 1: is a perspective view of the device for the dynamic measurement of an object's relative position.
- Fig. 2: is a perspective view of the device in Fig. 1, installed on a vehicle.
- Fig. 3: is an illustrative diagram for the value of the convergence angle (α). and
- Fig. 4: is an illustrative diagram for the value of the descent angle (γ).

### Detailed description of the drawings

The following description relates to the aforementioned drawings and allows detailed understanding of the different parts that make up the preferred embodiment of the device for the dynamic measurement of an object's relative position.

The device represented is based on a metal articulated arm (16) consisting of five working parts (11, 12, 13, 14 and 15), made of a lightweight material such as aluminium. Each of the articulated arm's working parts is connected to the next by an articulated rotational joint. In this way, the articulated rotational joint (22) acts about an imaginary axis (2) and connects the working parts (11) and (12), giving the device a degree of freedom of movement. In the same way, the articulated rotational joint (23) connects (12) and (13) about an imaginary axis (3), the rotational articulated joint (24) connects (13) and (14) about the imaginary axis (4) and finally, the articulated rotational joint (24) connects (14) and (15) about the imaginary axis (5). The device's fifth degree of freedom is provided by the rotational joint (21), which also connects the articulated arm (16), via a working part (11), with the reference point (10), about an imaginary axis (1).

In total there are five degrees of freedom in the system, three of which are used via the sensors, to determine the relative position of the end of the working part (15), coupled to the object for which the information is to be gathered, so that it is possible to determine the position of any point so long as it is the same solid. The two remaining degrees of freedom determine the two inclination angles (with respect to a reference) that define the object's plane of symmetry.

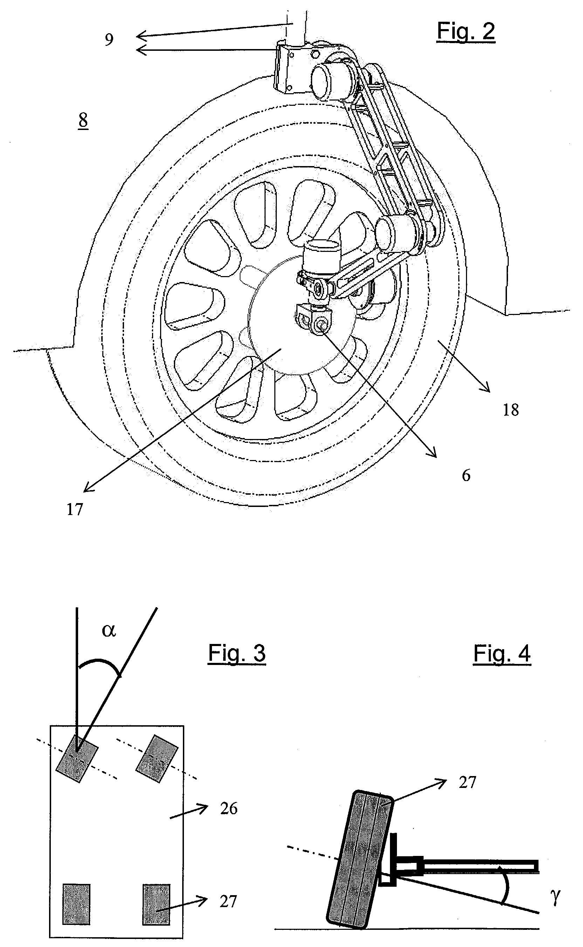

In the embodiment represented in the drawings, the plan in question simulates the wheel of a vehicle and the angles to be determined are the angle of rotation of the wheels, which determines the steering of the vehicle, denoted by the convergence angle α, and the inclination with respect to the horizontal, denoted by the descent angle γ. In Figs. 3 and 4, showing the aforementioned angles, the wheels (27) of a vehicle (26) are represented schematically for a clearer view of the measurement angles, Fig. 3 being a side elevation of the vehicle and Fig. 4 a frontal view of one of the vehicle's wheels.

In order to obtain a measurement of the aforementioned parameters (position and angles), the sensors (31, 32, 33, 34 and 35), which capture absolute angular position based on optical phenomena (commonly called encoders, by those skilled in the art), coupled to the joints (21, 22, 23, 24 and 25) communicate to an external system, not shown, the position or degree of rotation of each of the joints with respect to an initial circumstance or for a period of time. With the information from the sensors and from the device parameters (the lengths of its working parts), the spatial position of a point on the wheel can be determined, as well as the inclinations from the plane representative thereof, using mathematical calculations.

In order to carry out these aforementioned measurements dynamically, with the vehicle in motion, the adaptor (17) is coupled to a wheel (18) of the vehicle and the working part (15) of the articulated arm, via a rotational axle (see Fig.2). In this way, the number of degrees of freedom of the device is increased. Although not shown in the attached drawings, said axle could be coupled with a sensor to measure the rotational speed of the wheel or the number of revolutions per unit time. Furthermore, the reference point (10), joined to the vehicle, comprises a fixing device (9) that allows direct coupling to a fixed point on the vehicle, which, in the representation, is a point on the bodywork (8).

In the embodiment of the drawings, the geometry of the device is optimised so that the articulated arm adapts perfectly to the vehicle's wheel movements. In this way, the longitudinal dimensions of each of the working parts, along with the position of each of the joints give a final device that offers no resistance to the wheel's movement and that adapts perfectly to the course of the joint between the arm and the wheel.

Likewise, it is worth mentioning that the position of the joints along the articulated arm is also optimal for the particular application herein described.

## Claims

1. Device for the dynamic measurement of an object's relative position, with respect to a mobile reference system, of the type consisting of at least one articulated arm that connects the reference system with the object whose coordinates and relative position are to be determined, **characterised in that** it comprises an articulated mechanical arm (16) with five degrees of freedom with five angular positioned sensors (31, 32, 33, 34 and 35), which allow the measurement of the three spatial coordinates X, Y, and Z of a point on the object to be measured and the two inclination angles (α (convergence) and γ (descent)) that define a plane of symmetry for the object with respect to a reference point.

2. Device according to claim 1, **characterised in that** the articulated arm (16) with five degrees of freedom comprises: a rotational joint (21) about an imaginary axis (1), connecting the reference point (10) and the articulated arm (16) via a working part (11); three rotational joints (22, 23 and 24) about 3 parallel, imaginary axes (2, 3 and 4) respectively, with the same direction that connect the working parts (11, 12, 13 and 14); and another rotational joint (25) about an imaginary axis (5) connecting the working parts (14) and (15) of the articulated arm.

3. Device according to the previous claims, **characterised in that** the sensors (31, 32, 33, 34 and 35), in each of the rotational joints are respective optical angular position sensors.

4. Device according to the previous claims, **characterised in that** said device is adapted to be installed on a vehicle (8), so that the reference point (10) consists of a fixing device (9) adapted for coupling to a fixed point on a vehicle and **in that** the working part (15) of the articulated arm (16) comprises an adaptor (17) connected via a rotational axle (6) that can be coupled to one of the vehicle's wheels (7) so that the dynamic measurement device determines the relative position of a wheel with respect to a fixed point on the vehicle and allows the study of the dynamic behaviour of the running gear in different driving conditions.

5. Procedure to determine the dynamic behaviour of a passenger vehicle based on the measurement of the relative position of its wheels, **characterised in that** it uses at least one device for the dynamic measurement of an object's relative position, each device coupled to at least one of the vehicle's respective wheels (8).
